# EUROPEAN PATENT APPLICATION

(11) **EP 4 400 803 A1**
(43) Date of publication of application: **17.07.2024**
(21) Application number: 22866937.0
(22) Date of filing: 09.03.2022
(51) Int. Cl.: G01B 3/1048

(54) **TAPE MEASURE**

(30) Priority: 10.09.2021 JP 2021147766
(71) Applicant: Muratec-Kds Corp., Kyoto-shi, Kyoto 601-8326 (JP)
(72) Inventor: KONDO, Katsuyuki, Kyoto-shi, Kyoto 601-8326 (JP); SUGIURA, Takahiko, Kyoto-shi, Kyoto 601-8326 (JP)
(74) Representative: Hoffmann Eitle
(86) International application number: PCT/JP2022/010272
(87) International publication number: WO 2023/037603

(57) **Abstract**

A tape measure (10) includes: a measuring tape (MT); a case (1) that houses the measuring tape (MT) in such a manner that the measuring tape (MT) can be extracted from and retracted into the case (1); a metal bracket (2) attached to the case (1); and a magnet (4) attached to the metal bracket (2).

## Description

### TECHNICAL FIELD

The present invention relates to a tape measure.

### BACKGROUND ART

Conventionally, some tape measures have a magnet attached to a case. Japanese Patent Laying-Open No. 2006-242661 (PTL 1), for example, describes a tape measure having a magnet provided on a case. In this literature, the magnet is fixed to the case by members such as inserts, onserts, adhesives, screws, double-sided tape, etc. In this literature, a magnet is also provided on a claw of a measuring tape. Thus, the case and the claw are fixed by the magnets to an iron member of an object to be measured, which enables a single operator to perform measuring operations using the tape measure.

### CITATION LIST

### PATENT LITERATURE

PTL 1: Japanese Patent Laying-Open No. 2006-242661

### SUMMARY OF INVENTION

### TECHNICAL PROBLEM

In the tape measure described in the above literature, the attachment of the magnet to the case is inadequate. Thus, when the tape measure is removed after being affixed to steel walls, columns, etc. by the magnet, the magnet may be displaced from its normal position on the case. Therefore, the attachment of the magnet to the case becomes unstable.

The present invention was made in view of such a problem, and has an object to provide a tape measure that can stabilize attachment of a magnet to a case.

### SOLUTION TO PROBLEM

A tape measure of the present invention includes: a measuring tape; a case that houses the measuring tape in such a manner that the measuring tape can be extracted from and retracted into the case; a metal bracket attached to the case; and a magnet attached to the metal bracket.

### ADVANTAGEOUS EFFECTS OF INVENTION

According to the tape measure of the present invention, the attachment of the magnet to the case can be stabilized.

### BRIEF DESCRIPTION OF DRAWINGS

Fig. 1 is a perspective view schematically showing a configuration of a tape measure according to an embodiment.
Fig. 2 is an exploded perspective view schematically showing the configuration of the tape measure according to the embodiment.
Fig. 3 is a bottom view schematically showing the configuration of the tape measure according to the embodiment.
Fig. 4 is a side view schematically showing the configuration of the tape measure according to the embodiment.
Fig. 5 is a cross-sectional view along the line V-V in Fig. 4.
Fig. 6 is a front view schematically showing the configuration of the tape measure according to the embodiment.
Fig. 7 is a cross-sectional view along the line VII-VII in Fig. 6.

### DESCRIPTION OF EMBODIMENTS

An embodiment of the present invention is hereinafter described with reference to the drawings. The same or corresponding parts are designated by the same reference characters, and a description thereof will not be repeated unless necessary.

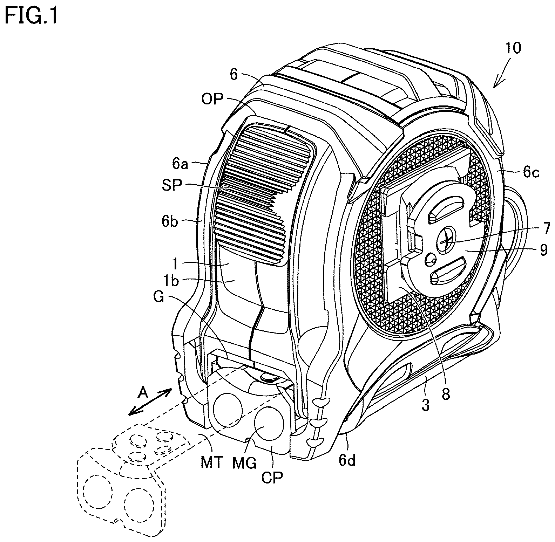

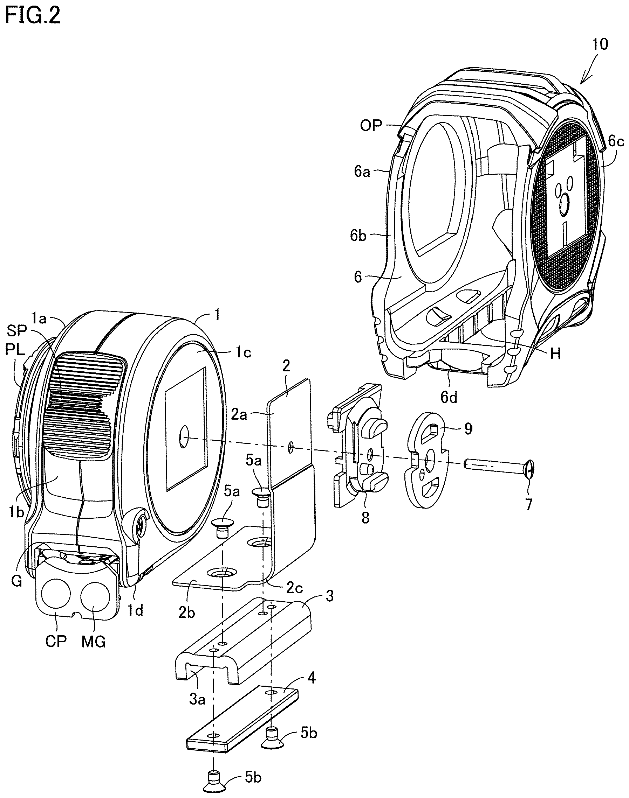

Referring to Figs. 1 and 2, a tape measure 10 according to the present embodiment mainly includes a measuring tape MT, a case 1, a metal bracket 2, a yoke 3, a magnet 4, a first screw 5a, a second screw 5b, a cover 6, an attachment screw 7, a first adapter 8, and a second adapter 9.

Tape measure 10 is intended to measure the length, etc. of an object to be measured with measuring tape MT. Tape measure 10 is configured such that measuring tape MT can be extracted from and retracted into case 1. Measuring tape MT may be curved in the width direction. Measuring tape MT may be made of steel. Measuring tape MT bears a scale.

A claw CP is attached to the tip end of measuring tape MT. Claw CP is configured to be latched in an inlet/outlet G of case 1, with measuring tape MT housed in case 1. Claw CP is exposed at inlet/outlet G of case 1, with measuring tape MT housed in case 1. Claw CP has a magnet (claw magnet MG).

Case 1 is configured to house measuring tape MT in such a manner that measuring tape MT can be extracted from and retracted into case 1. Case 1 has inlet/outlet G through which to extract and retract measuring tape MT. Case 1 is configured such that measuring tape MT can be extracted and retracted through inlet/outlet G in the direction of an arrow A in Fig. 1. The material for case 1 is preferably resin. This resin preferably does not contain an additive, a plasticizer, or a vulcanizer that softens the resin. This resin is ABS (Acrylonitrile-Butadiene-Styrene) resin, for example. The material for case 1 may be metal such as aluminum.

Case 1 has a front 1a, a side 1b, a back 1c, and a bottom 1d. Side 1b is arranged between front 1a and back 1c. Side 1b is provided with a stopper SP. Stopper SP is exposed at an opening OP in cover 6. Stopper SP is configured to be able to keep measuring tape MT pulled out of case 1. Bottom 1d has a planar shape. The scale on measuring tape MT is provided on the side opposite to bottom 1d.

Metal bracket 2 is attached to case 1. Metal bracket 2 is intended to hold yoke 3 and magnet 4 to case 1. The material for metal bracket 2 is metal. Metal bracket 2 has a higher rigidity than cover 6. In other words, metal bracket 2 is less deformable than cover 6. Metal bracket 2 is formed in an L-shape. Metal bracket 2 is arranged to extend along back 1c and bottom 1d of case 1. Metal bracket 2 is arranged continuously from back 1c to bottom 1d of case 1. Metal bracket 2 is formed as a plate.

Metal bracket 2 includes a side plate portion 2a, a bottom plate portion 2b, and a corner portion 2c. Side plate portion 2a is connected to bottom plate portion 2b via corner portion 2c. Side plate portion 2a is arranged substantially normal to bottom plate portion 2b. Bottom plate portion 2b is wider than side plate portion 2a. Corner portion 2c is curved. Corner portion 2c thus functions as a spring.

Side plate portion 2a is configured to extend along back 1c of case 1. Side plate portion 2a is in contact with back 1c of case 1. Bottom plate portion 2b is configured to extend along bottom 1d of case 1. Bottom plate portion 2b is in contact with bottom 1d of case 1. Corner portion 2c is configured to extend along the corner between back 1c and bottom 1d of case 1.

Side plate portion 2a is attached to back 1c of case 1 by attachment screw 7. With the attachment of side plate portion 2a to back 1c of case 1 by attachment screw 7, metal bracket 2 is attached to case 1.

Yoke 3 is attached to metal bracket 2. The material for yoke 3 is iron, for example. Yoke 3 is attached to metal bracket 2 with first screw 5a. Yoke 3 is attached to bottom plate portion 2b by first screw 5a. Specifically, yoke 3 is attached to bottom plate portion 2b by two first screws 5a. Two first screws 5a are spaced from each other in the longitudinal direction of yoke 3.

Yoke 3 is provided with a groove 3a in its bottom. Groove 3a extends in the longitudinal direction of yoke 3. Groove 3a extends continuously from one end to the other end in the longitudinal direction of yoke 3. Magnet 4 is inserted in groove 3a of yoke 3.

Magnet 4 is attached to metal bracket 2. Magnet 4 is attached to metal bracket 2 with yoke 3 interposed therebetween. Magnet 4 is formed in a rectangular shape. Magnet 4 is attached to yoke 3 with second screw 5b. Specifically, magnet 4 is attached to yoke 3 by two second screws 5b. Two second screws 5b are spaced from each other in the longitudinal direction of magnet 4. Magnet 4 is arranged to extend along bottom 1d of case 1.

Cover 6 is configured to cover case 1 and metal bracket 2. Cover 6 is intended to protect tape measure 10 itself. Cover 6 is also intended to protect an object that comes into contact with tape measure 10. Cover 6 is also intended to prevent slipping. Cover 6 is preferably made of an elastic member. Specifically, the material for cover 6 is preferably elastic resin. Since it is elastic, this resin contains at least one of an additive, a plasticizer, and a vulcanizer that softens the resin. This resin is rubber or elastomer resin, for example.

Cover 6 has a front portion 6a, a side portion 6b, a back portion 6c, and a bottom portion 6d. Front portion 6a is configured to extend along front 1a of case 1. Side portion 6b is configured to extend along side 1b of case 1. Back portion 6c is configured to extend along back 1c of case 1. Bottom portion 6d is configured to extend along bottom 1d of case 1. Side portion 6b is arranged between front portion 6a and back portion 6c. Cover 6 is provided with opening OP. Opening OP is provided in side portion 6b. Cover 6 is provided with a through hole H. Through hole H is provided in bottom portion 6d.

First adapter 8 is attached to back portion 6c of cover 6. First adapter 8 is arranged opposite to back 1c of case 1 with respect to back portion 6c. The material for first adapter 8 is metal, for example. Second adapter 9 is attached to first adapter 8. Second adapter 9 is arranged opposite to back portion 6c with respect to first adapter 8. Second adapter 9 is configured to be able to attach tape measure 10 to a tape measure holder (not shown). The material for second adapter 9 is metal, for example. First adapter 8 and second adapter 9 are attached to case 1 by attachment screw 7 with metal bracket 2 and cover 6 interposed therebetween.

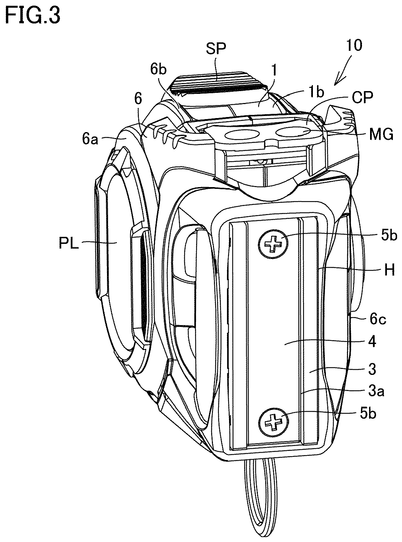

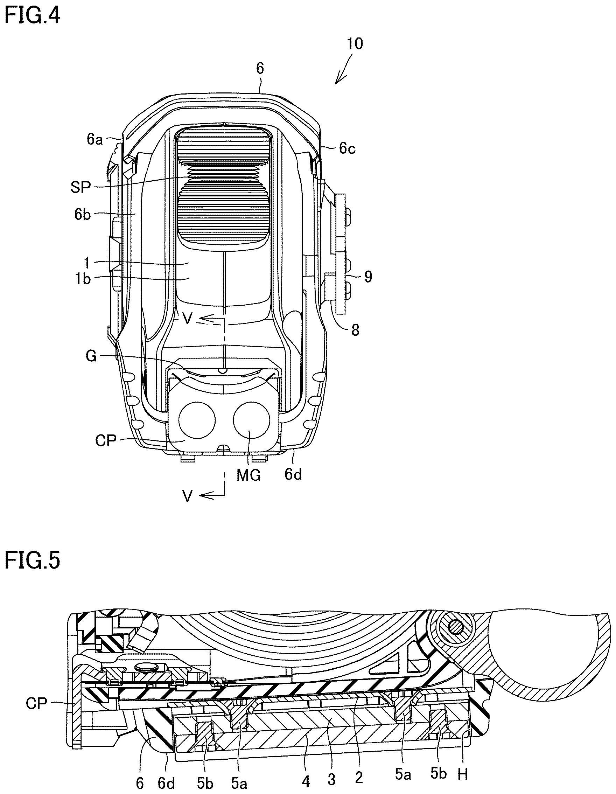

Referring to Figs. 3 to 5, yoke 3 and magnet 4 are arranged at the bottom of tape measure 10. Yoke 3 is arranged in through hole H provided in bottom portion 6d of cover 6. Magnet 4 is arranged in through hole H in cover 6. Yoke 3 and magnet 4 are exposed at bottom portion 6d of cover 6. The tip end of yoke 3 protrudes outward relative to magnet 4 inserted in groove 3a. The tip end of yoke 3 protrudes outward relative to two second screws 5b.

Two first screws 5a are screwed from metal bracket 2 toward yoke 3. Two second screws 5b are screwed from magnet 4 toward yoke 3. Two first screws 5a are arranged between two second screws 5b. Two first screws 5a are configured such that their tip ends do not pass through yoke 3 with their heads arranged on metal bracket 2. Two second screws 5b are configured such that their tip ends do not pass through yoke 3 with their heads arranged on magnet 4.

A plate PL is arranged on front portion 6a of cover 6. Plate PL is configured to display a manufacturer, a product name, etc. of tape measure 10. Plate PL serves as a nameplate. Plate PL has a higher rigidity than cover 6. In other words, plate PL is less deformable than cover 6. The material for plate PL is preferably resin. The material for plate PL may be metal such as aluminum.

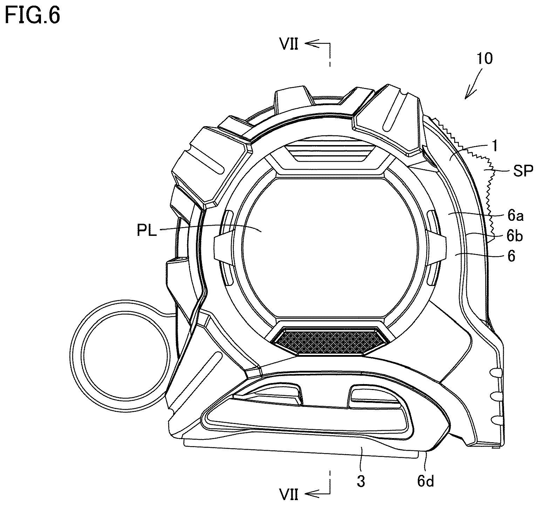

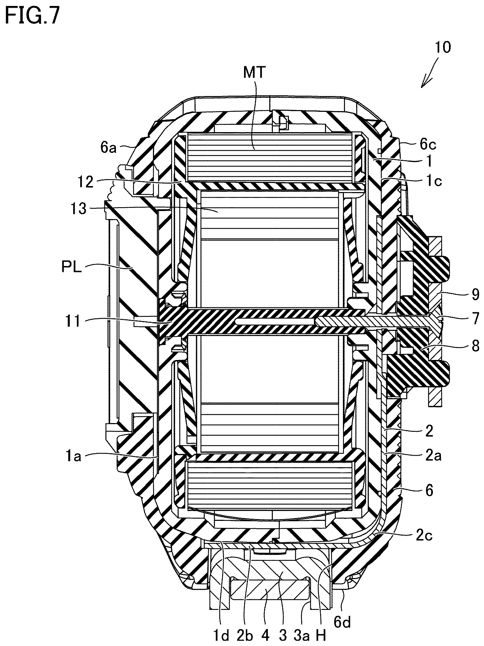

Referring to Fig. 6 and 7, metal bracket 2 is arranged on the outer side of case 1. Metal bracket 2 is arranged on the inner side of cover 6. Metal bracket 2 is arranged between case 1 and cover 6. Metal bracket 2 is in contact with case 1 and cover 6.

Side plate portion 2a is configured to extend along back portion 6c of cover 6. Side plate portion 2a is in contact with back portion 6c of cover 6. Bottom plate portion 2b is configured to extend along bottom portion 6d of cover 6. Bottom plate portion 2b is in contact with bottom portion 6d of cover 6. Corner portion 2c is configured to extend along the corner between back portion 6c and bottom portion 6d of cover 6. Corner portion 2c is in contact with the corner between back portion 6c and bottom portion 6d of cover 6.

Tape measure 10 further includes a winding shaft 11, a bobbin 12, and a power spring 13. Winding shaft 11 is attached to case 1. Attachment screw 7 is attached to winding shaft 11. Bobbin 12 is configured to rotate around winding shaft 11. Measuring tape MT is wound around the outer circumference of bobbin 12. Power spring 13 is housed on the inner circumference of bobbin 12. The base end of power spring 13 is attached to winding shaft 11. The tip end of power spring 13 is attached to the base end of measuring tape MT.

Measuring tape MT is biased so as to be wound around winding shaft 11 by power spring 13. Thus, when measuring tape MT is pulled out through inlet/outlet G of case 1, measuring tape MT is pulled out against the biasing force of power spring 13. Therefore, when the force to pull out measuring tape MT is released with measuring tape MT being pulled out through inlet/outlet G of case 1, measuring tape MT is pulled back into case 1 by the biasing force of power spring 13. When measuring tape MT is locked by stopper SP, measuring tape MT is kept pulled out of case 1 by stopper SP.

Next, functions and advantageous effects of tape measure 10 according to the present embodiment are described.

Regarding tape measure 10 according to the present embodiment, magnet 4 is attached to metal bracket 2 that has been attached to case 1. In other words, magnet 4 is attached to case 1 with metal bracket 2 interposed therebetween. Thus, magnet 4 can be securely attached to case 1 by metal bracket 2. Accordingly, the attachment of magnet 4 to case 1 can be stabilized. As a result, fixation of tape measure 10 to steel walls, columns, etc. by magnet 4 can be stabilized, which can allow for accurate measurement with tape measure 10.

Regarding tape measure 10 according to the present embodiment, magnet 4 is attached to metal bracket 2 with yoke 3 interposed therebetween. Thus, the attraction force of magnet 4 can be amplified by yoke 3.

Regarding tape measure 10 according to the present embodiment, yoke 3 is attached to metal bracket 2 with first screw 5a. Thus, yoke 3 can be securely attached to metal bracket 2 by first screw 5a.

Regarding tape measure 10 according to the present embodiment, magnet 4 is attached to yoke 3 with second screw 5b. Thus, magnet 4 can be securely attached to yoke 3 by second screw 5b.

Regarding tape measure 10 according to the present embodiment, metal bracket 2 is formed in an L-shape, and is arranged to extend along back 1c and bottom 1d. Thus, metal bracket 2 can be arranged to extend along the outer shape of case 1. Therefore, increase in size of tape measure 10 can be avoided by metal bracket 2.

In addition, magnet 4 is arranged to extend along bottom 1d. This facilitates reading of the scale on measuring tape MT provided on the side opposite to bottom 1d, with tape measure 10 affixed to steel walls, columns, etc. by magnet 4.

Regarding tape measure 10 according to the present embodiment, cover 6 is configured to cover case 1 and metal bracket 2. Thus, case 1 and metal bracket 2 can be protected by cover 6. Magnet 4 is arranged in through hole H in cover 6. Thus, when tape measure 10 is affixed to steel walls, columns, etc. by magnet 4, cover 6 can avoid contact of case 1 and metal bracket 2 with the steel walls, columns, etc.

If yoke 3 or magnet 4 is attached to cover 6, yoke 3 or magnet 4 may be displaced from its normal position on cover 6, and cover 6 may be stretched, when the tape measure is removed after being affixed to steel walls, columns, etc. by the magnet. As a result, wobble may occur in tape measure 10 when tape measure 10 is affixed to steel walls, columns, etc. by magnet 4. In tape measure 10 according to the present embodiment, on the other hand, yoke 3 or magnet 4 is not attached to cover 6, and therefore, yoke 3 or magnet 4 is not displaced from its normal position on cover 6, and cover 6 is not stretched. Therefore, no wobble occurs in tape measure 10 due to these factors when tape measure 10 is affixed to steel walls, columns, etc. by magnet 4.

In the tape measure according to the present embodiment, metal bracket 2 is attached to case 1 by attachment screw 7 that attaches first adapter 8 and second adapter 9 to case 1. In other words, attachment screw 7 that attaches first adapter 8 and second adapter 9 to case 1 can be utilized to attach metal bracket 2 to case 1. Therefore, productivity can be improved as compared to when a member only for attaching metal bracket 2 to case 1 is used.

While magnet 4 is arranged to extend along bottom 1d of case 1 in the above description, the arrangement of magnet 4 is not limited to this. Magnet 4 may be arranged not only to extend along bottom 1d of case 1, but also to extend along the top and the back of case 1. Thus, flexibility in attaching tape measure 10 to steel walls, columns, etc. by magnet 4 can be improved.

It should be understood that the embodiment disclosed herein is illustrative and non-restrictive in every respect. The scope of the present invention is defined by the scope of the claims, rather than the description above, and is intended to include any modifications within the scope and meaning equivalent to the scope of the claims.

### REFERENCE SIGNS LIST

1 case; 2 metal bracket; 3 yoke; 4 magnet; 5a first screw; 5b second screw; 6 cover; 7 attachment screw; 8 first adapter; 9 second adapter; 10 tape measure; H through hole; MT measuring tape.

## Claims

1. A tape measure comprising:
a measuring tape;
a case that houses the measuring tape in such a manner that the measuring tape can be extracted from and retracted into the case;
a metal bracket attached to the case; and
a magnet attached to the metal bracket.

2. The tape measure according to claim 1, further comprising a yoke, wherein
the yoke is attached to the metal bracket, and
the magnet is attached to the metal bracket with the yoke interposed therebetween.

3. The tape measure according to claim 2, further comprising a first screw, wherein
the yoke is attached to the metal bracket with the first screw.

4. The tape measure according to claim 3, further comprising a second screw, wherein
the magnet is attached to the yoke with the second screw.

5. The tape measure according to any one of claims 1 to 4, wherein
the case has a back and a bottom,
the metal bracket is formed in an L-shape, and is arranged to extend along the back and the bottom, and
the magnet is arranged to extend along the bottom.

6. The tape measure according to any one of claims 1 to 5, further comprising a cover provided with a through hole, wherein
the cover is configured to cover the case and the metal bracket, and
the magnet is arranged in the through hole in the cover.
